# EUROPEAN PATENT SPECIFICATION

(11) **EP 3 898 168 B1**
(45) Date of publication and mention of the grant of the patent: **03.04.2024**
(21) Application number: 19835782.4
(22) Date of filing: 17.12.2019
(51) Int. Cl.: B29C 48/10, B29C 55/28, B29C 48/20, B29C 48/025, B29C 48/152, B29C 48/92, B29C 48/49

(54) **METHOD FOR MANUFACTURING BLOWN FILM WITH SIMULTANEOUS COEXTRUSION OF LONGITUDINAL REINFORCEMENT COATINGS**
VERFAHREN ZUR HERSTELLUNG VON BLASFOLIEN BEI GLEICHZEITIGER KOEXTRUSION VON LONGITUDINALEN VERSTÄRKUNGSBESCHICHTUNGEN
PROCÉDÉ DE FABRICATION D'UN FILM SOUFFLÉ AVEC COEXTRUSION SIMULTANÉE DE REVÊTEMENTS DE RENFORT LONGITUDINAL

(30) Priority: 17.12.2018 IT 201800011184
(43) Date of publication of application: 27.10.2021
(73) Proprietor: Moccia, Maria Rita, 70042 Mola di Bari (BA) (IT); Saracino, Angela, 70010 Turi (BA) (IT)
(72) Inventor: Moccia, Maria Rita, 70042 Mola di Bari (BA) (IT); Saracino, Angela, 70010 Turi (BA) (IT)
(74) Representative: Fezzardi, Antonio
(86) International application number: PCT/IB2019/060940
(87) International publication number: WO 2020/128846

(56) References cited:
- WO-A1-99/03670
- WO-A1-2018/148371
- WO-A2-2007/083339
- WO-A2-2011/012910
- WO-A2-2011/026954
- FR-A- 1 543 062
- GB-A- 1 369 612
- JP-U- S61 119 961
- US-A- 2 709 834
- US-A- 3 482 278
- US-A- 3 548 723
- US-A1- 2007 045 903
- US-A1- 2015 259 103

## Description

The present invention relates a continuous method for manufacturing blown film with simultaneous coextrusion of reinforcement strips or coatings.

In particular, the present invention relates to a continuous method using a combined extruder system, which allows, simultaneously to the same manufacturing process, obtaining, laterally, and possibly also centrally or in intermediate positions, an extruded blown polyethylene film equipped with reinforcements (coatings), without having to perform processings in subsequent steps, as instead nowadays it is necessary to do.

FR 1 543 062 A discloses a device and method for manufacturing bags with handles from a tubular sheet of plastic material. The tubular sheet is produced by blow molding. The bags may be further provided with colored marginal reinforcements. To this end, the device may be implemented with additional supply conduits for feeding colored plastic material.

US 2007/04590 A1 discloses a process for manufacturing a cushioned blown film having a first blown film layer, a second blown film layer, and a plurality of cushioning cells defined between the first blown film layer and the second blow film layer. The cushioned blown films may be bonded to a fibrous web to make film nonwoven laminates.

US 2 709 834 A discloses a machine for manufacturing a longitudinally-striped plasticized material. The machine includes three extruders for extruding a plastic material. The extruders may be configured to feed respective plastic materials having different color and/or transparency, to allow obtaining a longitudinally striped plasticized material. Furthermore, the extruders may be adjusted in order to achieve desired dimensions of the stripes.

Further prior art relating to a system for manufacturing a blown film is known, for instance, from patent documents WO 2011/026954 A2, WO 2007/083339 A2, WO 99/03670 A1, US 2015/259103 A1 and WO 2018/148371 A1.

A widespread method for obtaining polyethylene films is extrusion by blowing and, currently, even medium-large sized polyethylene films are already manufactured by means of this extrusion process, as well as systems exist for manufacturing, in post-production to the films, certain reinforcement coatings or layers on the latter. The coatings are necessary at the edges of the polyethylene film, but are also useful in the central area or in intermediate positions, where, possibly due to the considerable size of the plastic surface, the latter is subject to tearing under spreading stress. Therefore, coatings which are well-spaced from one another allow ensuring a greater tearing resistance of the polyethylene film.

The known blowing extrusion process consists in passing the polyethylene polymer, heated by the extruder, through a circular die placed in a horizontal position. The film obtained is cooled and passed through a dragging calendering machine, which closes the system by closing up. In the known manufacturing process, air is also introduced, which air is intended to increase the volume of the system, inflating what closely resembles a balloon.

To date, film blowing extrusion technology allows manufacturing polyethylene films by means of a manufacturing process divided into the following steps:
- mixing polyethylene polymers;
- homogenizing and creating the molten material by means of worm screws;
- manufacturing the polyethylene bubble by insufflating cold air;
- controlling the thickness of the bubble;
- molding;
- winding the reels with desired length or weights;
- manual packaging of each reel.

The polyethylene film thus obtained may be cataloged as a finished product if it is intended for direct wholesale or retail sale, while it constitutes a semi-finished product when it needs further processing.

Taking, for example, the polyethylene films manufactured and sold in the agricultural field (in particular for covering orchards and vineyards), although the same film may be provided with a constant thickness over the entire surface of the film or, alternatively, be provided with thickened bands, it always needs a further coating processing, so as to unquestionably satisfy the end user, the latter being, nowadays, increasingly demanding in requesting a higher quality of the final product.

The subsequent step of reinforcing the polyethylene film in the background art is similar to a hot coating process, where the mother coil, produced during the extrusion step, undergoes a further transformation, in turn following the present production method:
- uncoiling the reels by means of motorized unwinders;
- tensioning the plastic film by means of dandy rolls or load cells;
- eliminating possible folds which may be generated during the uncoiling;
- applying two coatings (or reinforcements) at the side ends of the film and at least one coating in the central area;
- immediately calendering the coatings thus created to calibrate the nominal thickness of the latter;
- cooling down the coatings by immersing the film in tanks containing cold water or by means of heat exchange on cold metal rolls;
- laterally perforating the film to anchor the film to the vineyard by means of strings, such as, for example (but not exclusively) PVC tubings;
- further tensioning the thus-perforated film;
- folding and packaging the film in a length which is predetermined at the purchase order.

The main disadvantages of said method of proceeding by separately managing the two previously described and known processes creates inevitable inefficiencies, both production-wise and commercially.

Furthermore, said process separation does not ensure the complete and reliable traceability of the finished product, since the mother reel, produced with certain polyethylene polymers and with precise extrusion parameters (production speed in meters per minute, film cooling surface, energy absorption, total number of operators simultaneously engaged in the manufacturing process, anomalies relating to the operation of the systems) do not allow neither identification of the lots of the individual materials used and percentage of use thereof in the manufacturing process, nor continuous monitoring of the thickness of the film to be wound on coils or reels).

Said articulated and complex double procedure, as it may be easy to understand technically, does not allow unequivocally making the portion of polyethylene film cut in the coating step univocally traceable.

During the second coating step, in fact, it is only possible to identify the coil and the film thereof wound on it, and not also the specific section of the coil corresponding to the finished film.

The present invention is therefore totally innovative, in that there are no similar ones to date, and is also inventive, in that it has been devised for manufacturing blown film with simultaneous coextrusion of coatings by means of an innovative industrial manufacturing method.

The present invention is further inventive in that it also definitively solves the issues directly and indirectly connected to the current need to optimize the traceability of the finished product, as well as to minimize or completely avoid offcuts, warehouse residues and any possible waste due to senescence of the stored product.

It therefore is the object of the present invention to overcome said disadvantages of the background art by realizing a device which manufactures blown film with simultaneous coextrusion of reinforcement coatings of the polyethylene film, adopting an innovative industrial manufacturing method.

Such objects have been achieved by providing a new combined system for manufacturing blown film with simultaneous coextrusion of coatings consisting of longitudinal reinforcement strips and the industrial manufacturing method thereof, as better specified in the claims attached to the present description.

These objects and the consequent advantages, as well as the features of the device according to the present invention, will become more apparent from the following detailed description of a preferred solution, given by way of explanation, but not by way of limitation, with reference to the accompanying drawings, in which:
- **Figure 1** shows a three-dimensional axonometric diagrammatic view of the innovative combined system 1 for manufacturing blown film with simultaneous coextrusion of coatings consisting of longitudinal reinforcement strips;
- **Figure 2** shows a bidimensional diagrammatic view of the front elevation of the innovative combined system 1, referred to in the present invention and reported above in Figure 1;
- **Figure 3** shows a diagrammatic plan view from above of the innovative combined system 1 shown in Figures 1 and 2 above;
- **Figure 4** shows a diagrammatic view of section A-A of the innovative combined system 1, shown in Figure 2 above;
- **Figure 5** shows a bidimensional diagrammatic view of the front elevation of a first preferred solution of the system L for manufacturing the polyethylene films 2;
- **Figure 6** shows a bidimensional diagrammatic plan view of a second preferred solution of the system L for manufacturing the polyethylene films 2;
- **Figure 7** shows a bidimensional diagrammatic view of the front elevation of the system L for manufacturing the polyethylene films 2 referred to in Figure 7 above;
- **Figure 8** shows another three-dimensional axonometric diagrammatic view, this time represented by means of rendering, of the innovative combined system 1 for manufacturing blown film with simultaneous coextrusion of coatings consisting of side or central (or intermediate) longitudinal reinforcement strips referred to in the present invention.

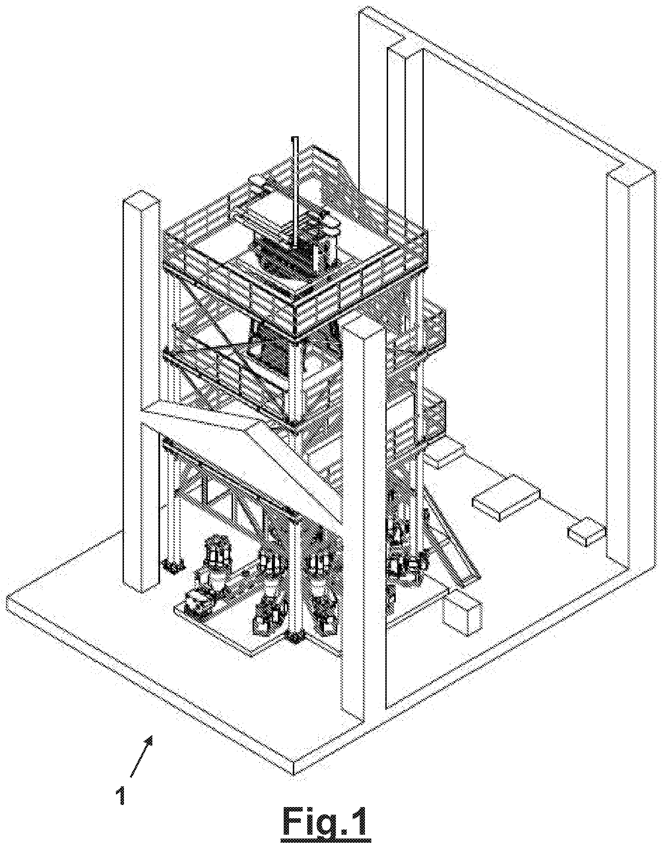

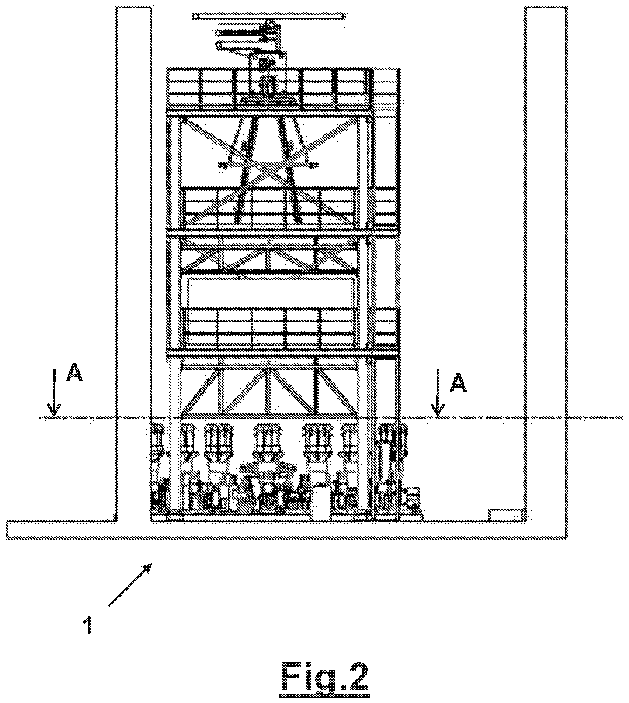

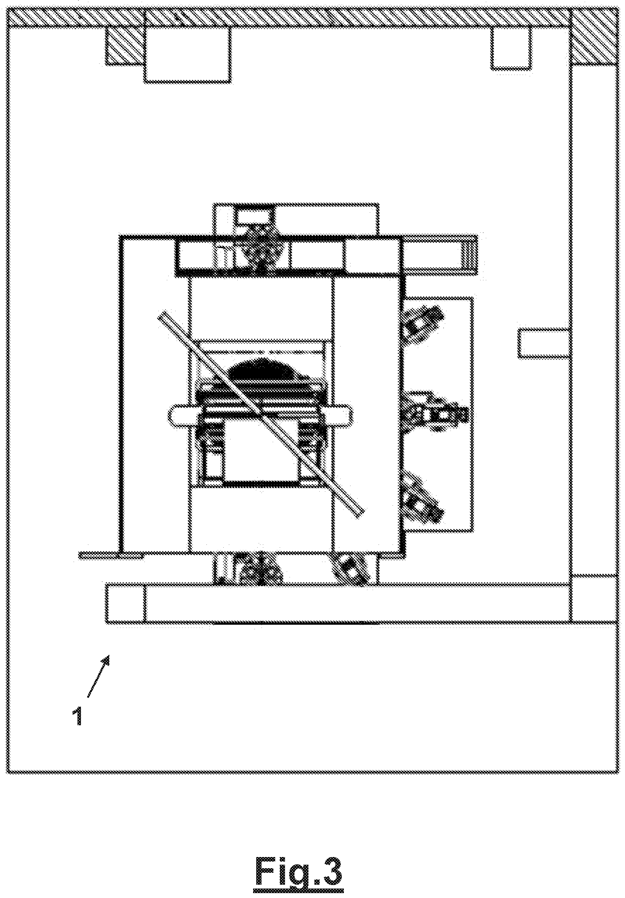

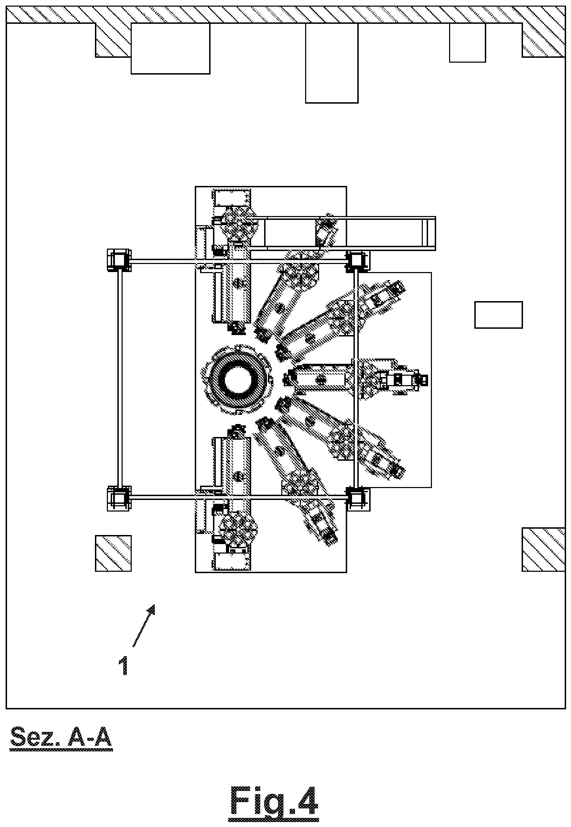

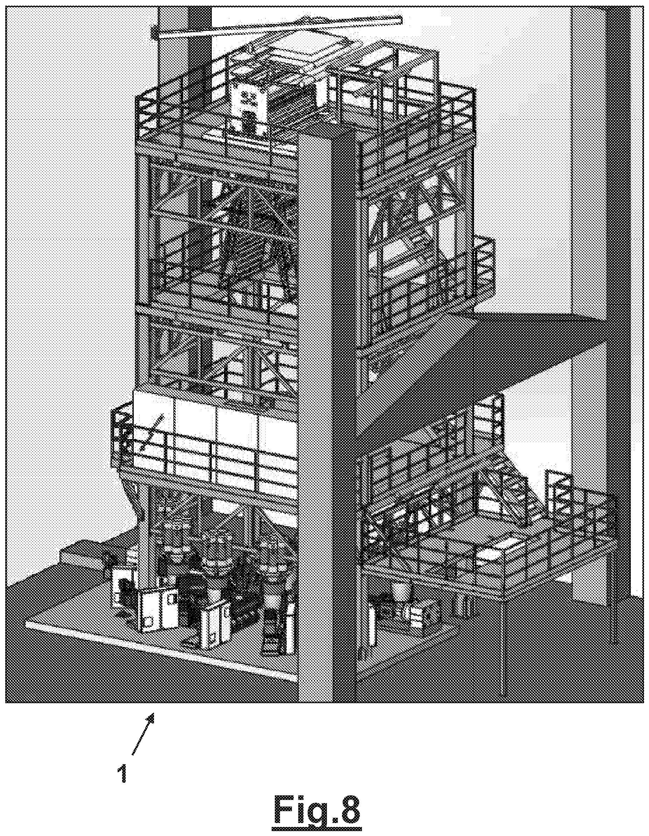

Figures 1-8 attached show the simplicity of the inventive idea, consisting in having managed to combine the known process for manufacturing a blown polyethylene film 2 with the process of manufacturing reinforcements or coatings consisting of longitudinal reinforcement strips, implemented by means of the extruder 3, applicable both to the side edges and in other positions intermediate to the plastic film itself, without having to perform processings in subsequent steps, as instead nowadays it is necessary to do.

In this regard, it should be noticed that blown films may also be manufactured with a known device for cutting and opening the blown film 2 which produces, with a single knife, a single cutting on the blown film, proceeding to stretch and open it to the maximum extent of the film, i.e., about 2π times the final radius obtained by the filming head, finally bringing it on a single plane to then wind it by means of a single winder 16 on one of the coils 17-18.

It should be noted that the apparatus for cutting and opening films 2, during the manufacturing thereof, therefore exploits a known blow forming process, and is in the present description applied in a preferred, but not limitative, solution to the films for agriculture.

The inventive scope of the present combined system may be evident only to a technician skilled in the art, who may understand why, to date, it has not been easy to achieve the same result, since it is necessary to intervene also on the global management software of the combined system thus devised. Following the alignment of the two known processes, i.e., the initial one of forming the blown film and the final one of applying at least one side and central (or intermediate) film reinforcement strip, together with the subsequent perforating and packaging operations thereof, an innovative extrusion process management software was also created which automatically dialogs with the continuous film cutting management software, and, therefore, all the information in the management database may be allocated to each individual film cut to size based on the last purchase order of the customer and, vice versa, any information generated by the coating process (hole distance, cooling water temperature, number of turns of the screws of the coating extruders, meter per minute amount of coating thickening, electricity consumption, number of cuttings, end customer code, marquee code, final purchase order code, manufacturing date including hours and minutes, etc.) will already be allocated to the film extrusion step, thus obtaining a complete and efficient traceability of the final product in such a way as to ensure a complete information on and a warranty of the product purchased.

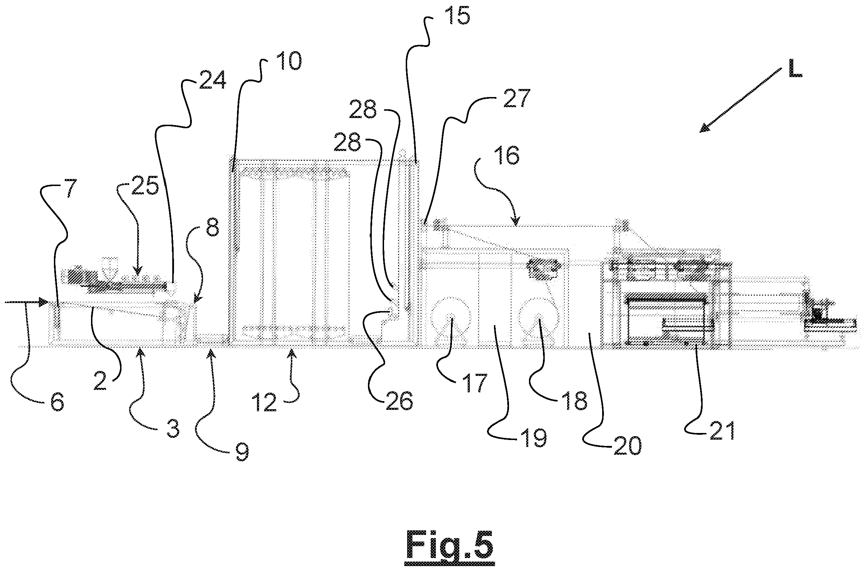

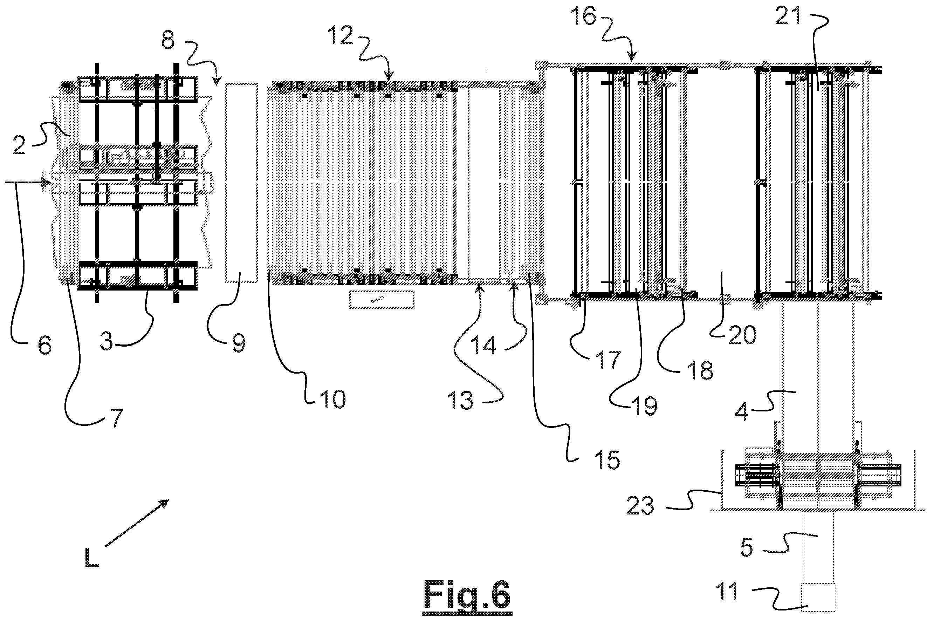

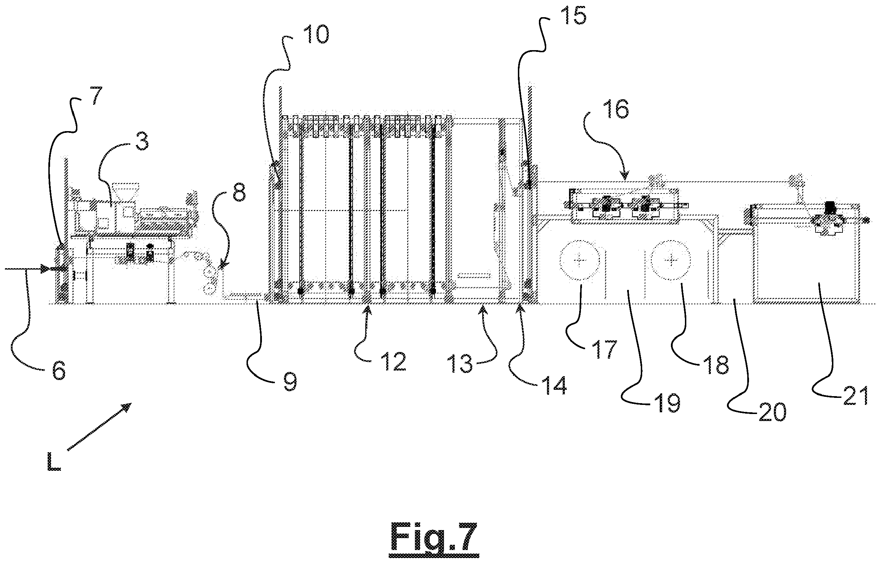

The process is therefore characterized by having devised an innovative combined system (Figures 1, 2, 3, 4 and 8) for manufacturing films 2 with side and intermediate reinforcements, in which a first system 1 for forming the blown film 2 is combined with a second system L for manufacturing the longitudinal reinforcement strips on said film 2 having the following constructive peculiarities:
- in a first preferred solution (Figure 5) said second system L substantially consists of an extruder 3 of the coating, placed at the arrival point 6 of the film 2, where a first pneumatic adjustment arrival dandy roll assembly 7 sends the film 2 to a group of extruders 25 of the coating which, by means of an applying device 24, manufactures the side reinforcement strips of the film 2. A cooling step follows, with the passage of the film, with the thus-formed side edge, through an area 8 provided with a plurality of stainless steel rolls and counter-rolls. The film 2 therefore passes into an accumulation area 12, where specific perforations are performed by means of a series of perforators, a central one 26 and two side ones 28. Other series of dandy rolls 10 and 15 allow, also by means of the possible aid of a service dragging roll assembly 27, the sliding of the film 2, first to a winder 16, in turn equipped with a pair of winding coils 17-18, and then to a folding machine 21. A plurality of service passages 9, 19-20 allow controlling operators to monitor the regular progress of the process by making possible stops for the correct adjustment thereof;
- in a second preferred embodiment, the film manufacturing system L (Figures 6 and 7) is essentially formed by an extruder 3 of the coating consisting of longitudinal reinforcement strips, always placed at the arrival point 6 of the film 2, where a first pneumatic adjustment arrival dandy roll assembly 7 sends the film 2 to a group of extruders of the coating which, by means of an applying device, manufactures the side reinforcement strips of the film 2 and possibly, upon request, according to the purchase order, also central or intermediate strips. A cooling step follows, with the passage of the film, with the thus-formed side edge, through an area 8 provided with a plurality of stainless steel rolls and counter-rolls. The film 2 therefore passes into an accumulation area 12, where specific perforations are performed by means of a series of perforators, adapted, in a first area, to perform the central perforation 13 of the film 2 and, in a subsequent area, to perform the side perforation 14 thereof. Other series of dandy rolls 10 and 15 allow, also by means of the possible aid of further dragging roll assemblies, the sliding of the film 2, first to a winder 16, in turn equipped with a pair of winding coils 17-18, and then to a folding machine 21. A plurality of service passages 9, 19 -20 allow controlling operators to monitor the regular progress of the process by making possible stops for the correct adjustment thereof. The film 2, thus reinforced and perforated, passes on an inspection belt 4 to a packaging machine 23 which, by means of an upward belt 5, sends the thus-packaged film in a specific container 11.

Said side and central perforations of the film (or made in other intermediate areas according to the specific purchase order received) are required for the correct spreading and tensioning of the film 2 itself during the step of applying it so as to cover agricultural crops (tents, orchards, etc.).

Said combined system therefore implements a film manufacturing process 2, which, in a preferred but not limitative solution, comprises the following steps:
- mixing polyethylene polymers;
- homogenizing and creating the molten material by means of worm screws;
- manufacturing the polyethylene bubble by insufflating cold air;
- controlling the thickness of the bubble;
- molding and correspondingly applying two reinforcement strips to the longitudinal side edges of the film 2 and preferably, also a reinforcement strip in the central area, or in the areas intermediate to both, simultaneously tensioning the plastic film by means of dandy rolls (7, 10, 15) or load cells;
- immediately calendering the reinforcement strips thus created to calibrate the nominal thickness of the latter;
- cooling down the reinforcement strips by immersing the film in tanks containing cold water or by means of heat exchange on cold metal rolls 8 or by means of cold air jets;
- perforating 14, 28 the thus-reinforced side edges of the film to anchor the film to the vineyard by means of PVC tubings or other similar strings;
- further tensioning the thus-perforated film 27;
- folding 21 and packaging 23 the film in a length predetermined at the purchase order in specific containers 11 with a corresponding reliable codified labeling of the entire manufacturing process of the film.

The main advantage of the present invention with respect to the background art stands precisely in that the present combined system for manufacturing blown film with simultaneous coextrusion of coatings constituted by longitudinal reinforcement strips allows obtaining, simultaneously, with the same manufacturing process, an extruded blown polyethylene film equipped with side, central or intermediate longitudinal reinforcement strips, without having to perform processings with subsequent steps, as, instead, is known to be necessary nowadays, with evident costs due to the double processing and movement of the coils.

A further advantage, provided by this combined system, consists in that the union of the two processings also allows obtaining interesting advantages with regard to the traceability of the finished product.

Other indisputable advantages derive from the fact that, with this combined system, offcuts, warehouse residues and the relative waste or products unsold due to polyethylene senescence are minimized, since it is no longer necessary to bring the polyethylene reels to the coating step to be cut at the size required by the customer. In fact, the almost complete - if not total - reduction of waste and offcuts is given precisely by the fact that the reels of polyethylene film, up to now generated, during the primary extrusion step, with standard sizes or standard masses (standard kilograms, the latter dictated by the maximum stress features of the coils of the winders, while the lengths are determined by the maximum winding diameters of the coils themselves), may, with this system, be made to a well predetermined measure, in length or mass, as contracted during the purchase order step.

The further advantages of the present process and of the method thereof derive from the minimization of energy consumption, as well as from the improper use of the polyethylene itself, which up to date constituted said waste and/or offcuts.

It is also evident that the embodiment described above, given by way of explanation and not by way of limitation, may be subject to numerous revisions, adaptations, additions, variations and substitutions of elements with other functionally equivalent ones, without however departing from the scope of protection of the following claims.

### REFERENCE NUMERALS

1.SYSTEM FOR MANUFACTURING BLOWN FILM
2.FILMS OR BLOWN POLYETHYLENE FILMS
3.COATING EXTRUDER CONSISTING OF LONGITUDINAL REINFORCEMENT STRIPS
4.INSPECTION BELT
5.UPWARD BELT
6.ARRIVAL POINT OF THE FILM 2
7.FIRST PNEUMATIC ADJUSTMENT ARRIVAL DANDY ROLL
8.COOLING AREA WITH STAINLESS STEEL ROLLS AND COUNTER-ROLLS
9.FIRST PASSAGE FOR CONTROLLING OPERATOR
10.SECOND DANDY ROLL
11.FINISHED PRODUCT CONTAINER
12.ACCUMULATION AREA
13.FILM CENTRAL PERFORATION AREA
14.FILM SIDE PERFORATION AREA
15.THIRD DANDY ROLL
16. WINDER
17.FIRST COIL EXIT
18.SECOND COIL EXIT
19.SECOND PASSAGE FOR CONTROLLING OPERATOR
20.THIRD PASSAGE FOR CONTROLLING OPERATOR
21.FOLDING MACHINE
22.INSPECTION BELT
23.PACKAGING MACHINE
24.SIDE BAND APPLICATION DEVICE
25.GROUP OF EXTRUDERS OF THE COATING
26.CENTRAL PERFORATOR
27.SERVICE FILM DRAGGING ROLLS
28.SIDE PERFORATORS

L SYSTEM FOR MANUFACTURING FILM PROVIDED WITH LONGITUDINAL COATINGS AND PERFORATIONS, PRESENT IN COMBINATION WITH AND DOWNSTREAM OF THE SYSTEM 1

## Claims

1. A continuous method for manufacturing blown films (2) with simultaneous coextrusion of longitudinal reinforcement strips or coatings on the manufactured film (2) and subsequent steps of perforating the film and correspondingly packaging it in lengths or masses predefined according to a purchase order,
by means of a combined system (1, L) which includes means for implementing a dedicated management software, wherein said combined system is configured to couple in sequence a system (1) for manufacturing the blown polyethylene film (2) with a system (L) for manufacturing said longitudinal reinforcement strips or coatings by means of coextrusion, whereby the method comprises the following sequential steps:
- mixing polyethylene polymers;
- homogenizing and creating the molten material by means of worm screws;
- manufacturing the polyethylene bubble by insufflating cold air;
- controlling the thickness of the bubble;
- molding and correspondingly applying two longitudinal reinforcement strips to the side edges of the film (2), simultaneously tensioning the plastic film by means of dandy rolls (7, 10, 15) or load cells;
- immediately calendering the reinforcement strips thus created to calibrate the nominal thickness thereof;
- cooling down the reinforcement strips by immersing the reinforced film in tanks containing cold water or by means of heat exchange on cold metal rolls (8) or by means of cold air jets;
- perforating (14, 28) the side reinforcement strips of the film so that it may be anchored by means of strings;
- further tensioning the thus-perforated film (27);
- winding the film (23) on a collecting coil (17, 18) or folding (21) and packaging it in a length which is predetermined at the purchase order, in specific containers (11) with a corresponding reliable codified labeling of the entire manufacturing process of the film (2).

2. A method for manufacturing blown films (2) according to the preceding claim, **characterized in that** the step of applying the two side reinforcement strips also includes providing at least one reinforcement strip in the central area or in the intermediate areas as well.

3. A method according to one of preceding claims, **characterized in that** said combined system (1, L) is a combined system for manufacturing blown films (2) with coextrusion of coatings constituted by longitudinal reinforcement strips performed in sequence, said combined system including means for implementing a dedicated management software,
wherein said combined system is configured to couple in sequence a system (1) for manufacturing the blown polyethylene film (2) with a system (L) for manufacturing said longitudinal reinforcement strips or coatings by means of coextrusion, as well as for the perforation thereof, as well as means (23) for correspondingly packaging them in lengths or masses predefined according to the purchase order;
wherein the system (L) further includes dandy rolls (7, 10, 15) for tensioning the film (2) equipped with reinforcement strips, means for calendering the reinforcement strips, and cold metal rolls (8) or cold air jets to cool said reinforcement strips.

4. A method according to the preceding claim, **characterized in that** said combined system further includes folding means (21) and packaging means (23) for the reinforced film, in a length which is predetermined by the purchase order, in specific containers (11), as well as means for the corresponding reliable and codified labeling of the entire manufacturing process of the film (2).

## Patentansprüche

1. Kontinuierliches Verfahren für die Herstellung von Blasfolien (2) mit gleichzeitiger Coextrusion von längsverlaufenden Verstärkungsstreifen oderbeschichtungen auf der hergestellten Folie (2) und darauffolgenden Schritten des Durchlöcherns der Folie und entsprechendem Verpacken derselben in Längen oder Massen, die einem auf Auftrag entsprechend vordefiniert sind,
durch ein kombiniertes System (1, L), das Mittel zum Realisieren einer zweckbestimmten Managementsoftware umfasst, wobei das kombiniertes System konfiguriert ist, ein System (1) für die Herstellung des Polyethylenblasfilms (2) mit einem System (L) für die Herstellung der längsverlaufenden Verstärkungsstreifen oder -beschichtung durch Coextrusion sequentiell zu paaren, wobei das Verfahren die folgenden aufeinanderfolgenden Schritte umfasst:
- Mischen von Polyethylenpolymeren;
- Homogenisieren und Erzeugen des geschmolzenen Materials durch eine Schnecke;
- Herstellen der Polyethylenblase durch Einblasen kalter Luft;
- Regulieren der Dicke der Blase;
- Formen und entsprechendes Aufbringen von zwei längsverlaufenden Verstärkungsstreifen auf die Seitenkanten der Folie (2), gleichzeitiges Spannen der Kunststofffolie durch Wasserzeichenroller (7, 10, 15) oder Wägezellen;
- sofortiges Kalandrieren der so erzeugten Verstärkungsstreifen, um die Nenndicke davon zu kalibrieren;
- Abkühlen der Verstärkungsstreifen durch Eintauchen der verstärkten Folie in Behälter, die kaltes Wasser enthalten, oder durch Wärmeaustausch auf kalten Metallwalzen (8) oder durch Kaltluftdüsen;
- Durchlöchern (14, 28) der Seitenverstärkungsstreifen der Folie, so dass sie durch Schnüre verankert werden kann
- weiteres Spannen der so durchlöcherte Folie (27);
- Wickeln der Folie (23) auf eine Sammelspule (17, 18) oder Falzen (21) und Verpacken derselben in einer Länge, die in dem Kaufauftrag vorbestimmt ist, in spezifischen Behältern (11) mit einer entsprechenden verlässlichen chiffrierten Etikettierung des gesamten Herstellungsvorgangs der Folie (2).

2. Verfahren für die Herstellung von Blasfolien (2) nach dem vorhergehenden Anspruch, **dadurch gekennzeichnet, dass** der Schritt des Aufbringens der beiden Seitenverstärkungsstreifen auch das Bereitstellen mindestens eines Verstärkungsstreifens im mittleren Bereich oder in den Zwischenbereichen ebenfalls umfasst.

3. Verfahren nach einem der vorhergehenden Ansprüche, **dadurch gekennzeichnet, dass** das kombinierte System (1, L) ein kombiniertes System für die Herstellung von Blasfolien (2) mit der Coextrusion von Beschichtungen, die durch längsverlaufende Verstärkungsstreifen gebildet sind, sequentiell ausgeführt, ist, wobei das kombinierte System Mittel zum Realisieren zweckbestimmter Managementsoftware umfasst,
wobei das kombinierte System konfiguriert ist, ein System (1) für die Herstellung der Polyethylenblasfolie (2) mit einem System (L) für die Herstellung der längsverlaufenden Verstärkungsstreifen oder -beschichtungen durch Coextrusion sequentiell zu paaren, sowie für das Durchlöchern davon, sowie Mittel (23) zum entsprechenden Verpacken derselben in Längen oder Massen, die dem Auftrag entsprechend vordefiniert sind;
wobei das System (L) ferner Wasserzeichenroller (7, 10, 15) zum Spannen der Folie (2), die mit Verstärkungsstreifen ausgestattet ist, Mittel zum Kalandrieren der Verstärkungsstreifen und Kaltmetallwalzen (8) oder Kaltluftdüsen zum Kühlen der Verstärkungsstreifen umfasst.

4. Verfahren nach dem vorhergehenden Anspruch, **dadurch gekennzeichnet, dass** das kombinierte System ferner Falzmittel (21) und Verpackungsmittel (23) für die verstärkte Folie in einer Länge, die dem Auftrag entsprechend vorbestimmt ist, in spezifischen Behältern (11) sowie Mittel für die entsprechende verlässliche chiffrierte Etikettierung des gesamten Herstellungsvorgangs der Folie (2) umfasst.

## Revendications

1. Procédé de fabrication continue de films soufflés (2) avec une coextrusion simultanée de bandes de renforcement longitudinales ou de revêtements sur le film fabriqué (2), et des étapes ultérieures de perforation du film et de son emballage de manière correspondante dans des longueurs ou masses prédéfinies en fonction d'un bon de commande, au moyen d'un système combiné (1, L) qui inclut des moyens de mise en oeuvre d'un logiciel de gestion dédié, dans lequel ledit système combiné est configuré pour coupler en séquence un système (1) de fabrication du film de polyéthylène soufflé (2) avec un système (L) de fabrication desdites bandes de renforcement longitudinales ou desdits revêtements au moyen d'une coextrusion, moyennant quoi le procédé comprend les étapes séquentielles suivantes :
- le mélange de polymères de polyéthylène ;
- l'homogénéisation et la création du matériau fondu au moyen de vis sans fin ;
- la fabrication de la bulle de polyéthylène par insufflation d'air froid ;
- la commande de l'épaisseur de la bulle ;
- le moulage et l'application de manière correspondante de deux bandes de renforcement longitudinales sur les bords latéraux du film (2), tendant simultanément le film plastique au moyen de rouleaux égoutteurs (7, 10, 15) ou de cellules de chargement ;
- le calandrage immédiat des bandes de renforcement ainsi créées pour calibrer l'épaisseur nominale de celles-ci ;
- le refroidissement des bandes de renforcement par immersion du film renforcé dans des réservoirs contenant de l'eau froide ou au moyen d'un échange de chaleur sur des rouleaux métalliques froids (8) ou au moyen de jets d'air froid ;
- la perforation (14, 28) des bandes de renforcement longitudinales du film de manière à permettre son ancrage au moyen de cordons ;
- la tension supplémentaire du film ainsi perforé (27) ;
- l'enroulement du film (23) sur une bobine de collecte (17, 18) ou le pliage (21) et l'emballage de celui-ci dans une longueur qui est prédéterminée au niveau du bon de commande, dans des conteneurs spécifiques (11) avec un étiquetage codifié fiable correspondant de l'ensemble du processus de fabrication du film (2).

2. Procédé de fabrication de films soufflés (2) selon la revendication précédente, **caractérisé en ce que** l'étape d'application des deux bandes de renforcement latérales inclut également la fourniture d'au moins une bande de renforcement dans la zone centrale ou dans les zones intermédiaires également.

3. Procédé selon l'une des revendications précédentes, **caractérisé en ce que** ledit système combiné (1, L) est un système combiné pour la fabrication de films soufflés (2) avec une coextrusion de revêtements constitués par des bandes de renforcement longitudinales réalisées en séquence, ledit système combiné incluant des moyens de mise en oeuvre d'un logiciel de gestion dédié, dans lequel ledit système combiné est configuré pour coupler en séquence un système (1) de fabrication du film de polyéthylène soufflé (2) avec un système (L) de fabrication desdites bandes de renforcement longitudinales ou desdits revêtements au moyen d'une coextrusion, ainsi que pour la perforation de ceux-ci, ainsi que des moyens (23) pour leur emballage correspondant dans des longueurs ou masses prédéfinies en fonction du bon de commande ; dans lequel le système (L) inclut en outre des rouleaux égoutteurs (7, 10, 15) pour tendre le film (2) équipé de bandes de renforcement, des moyens de calandrage des bandes de renforcement, et des rouleaux métalliques froids (8) ou des jets d'air froid pour refroidir lesdites bandes de renforcement.

4. Procédé selon la revendication précédente, **caractérisé en ce que** ledit système combiné inclut en outre des moyens de pliage (21) et des moyens d'emballage (23) pour le film renforcé, dans une longueur qui est prédéterminée par le bon de commande, dans des conteneurs spécifiques (11), ainsi que des moyens pour l'étiquetage fiable et codifié correspondant de l'ensemble du processus de fabrication du film (2).
